# EUROPEAN PATENT SPECIFICATION

(11) **EP 1 022 192 B1**
(45) Date of publication and mention of the grant of the patent: **25.02.2004**
(21) Application number: 00100972.9
(22) Date of filing: 19.01.2000
(51) Int. Cl.: B60R 9/045

(54) **A foot for fixing a load-carrying cross-member to a longitudinal rail of a motor-vehicle roof**
Stützfuss zur Befestigung eines Lastenquerträgers an einer Fahrzeugdachreling
Pied pour la fixation d' une traverse de support de charge sur une barre de toit de véhicule

(30) Priority: 21.01.1999 IT TO990006 U
(43) Date of publication of application: 26.07.2000
(73) Proprietor: FAPA S.p.A., 10092 Beinasco (Torino) (IT)
(72) Inventor: Baravalle, Ugo, 10190 Beinasco (TO) (IT)
(74) Representative: Cian, Paolo

(56) References cited:
- EP-A- 0 437 211
- EP-A- 0 727 334
- GB-A- 2 303 344

## Description

The present invention relates to a foot for fixing a load-carrying cross-member to a longitudinal rail of a motor-vehicle roof, according to the preamble to Claim 1.

Throughout the present description and in the claims, terms and expressions indicating positions and orientations are intended to refer to the installed condition on a motor vehicle. Thus, the expression "inner side" indicates a side facing towards the centre of the vehicle roof and the expression "outer side" indicates a side facing towards the lateral edge of the roof.

The term "load-carrying cross member" is intended to define a cross-member of any device intended for transporting objects on a motor-vehicle roof such as, for example, a roof-rack bar, a ski rack, a boat rack, or a bicycle rack.

A fixing foot according to the preamble to Claim 1 is known from the document DE-U-82 29 446, according to which the two ends of the loop are anchored to the nut portion and the member for the engagement of the tip of the loop is fixed to and forms part of the body of the foot.

A very similar fixing foot, in which the member for the engagement of the tip of the loop is formed on the nut portion and the two ends of the loop are anchored in a fixed position on the body of the foot is known from the document DE-U-84 04 525.

In both of these known devices, the portions of the loop between the anchorage ends and the tip of the loop extend along paths arranged substantially at an obtuse angle, the region corresponding to the vertex of which is situated beneath the rail.

With this arrangement, the rail is gripped between the loop and a pad by which the foot bears on the rail by a substantially vertical component of a force which, in order to be of sufficient magnitude, subjects the cable constituting the loop to a tensile stress which may be excessive.

The cables used comprise a core constituted by a thin steel wire rope and a sheath of PVC or other plastics material. An excessive tensile stress may fatigue the core by reducing the twist of the wires or by stretching.

In order to reduce the tensile stress, it would be necessary to move both the anchorage point of the two ends of the loop and the engagement member closer to the rail so that the two portions of the loop would at least form an acute angle or, preferably, would be parallel to one another.

Although this hypothetical arrangement would be advantageous with regard to the tensile stress to which the cable of the loop would be subjected, it would result in an increase in the height of the foot which, from the aerodynamic point of view, could lead to an undesirable height of the cross-member relative to the roof.

The main object of the invention is to provide a fixing foot of the type in question, by virtue of which the cable constituting the loop is not subject to an excessive tensile stress, for a given gripping force, but which none the less has an acceptable length so that, from the aerodynamic point of view, the load-carrying cross-member remains at a reasonably low height above the surface of the motor-vehicle roof.

According to the invention, this object is achieved by means of a fixing foot as claimed.

By virtue of this concept, as will be understood better from the description with reference to the drawings, the two portions of the loop situated on the inner and outer sides of the rail are substantially parallel to one another so that they are subjected to a tensile stress substantially equal to half of that to which they would be subjected if, with the sides parallel, one end of the loop (the anchoring ends or the tip) were fixed.

The arrangement according to the invention in fact corresponds to a half pulley system of which the pulley is constituted by the rail.

With this arrangement, for a given tensile stress on the cable, the travel which the nut portion has to perform is halved in comparison with the travel which it would have to perform if one of the ends of the loop were fixed. As a result, the fixing foot of the cross-member of the foot can have vertical dimensions which are within acceptable limits from the aerodynamic point of view.

The invention also relates to a load-carrying cross-member having a pair of such fixing feet.

The invention will become clearer from a reading of the following detailed description of a preferred embodiment thereof, given by way of non-limiting example and illustrated in the appended drawings, in which:
Figure 1 is a perspective view showing part of a motor-vehicle roof and of one of the two longitudinal rails fixed to the roof and an end portion of a load-carrying cross-member having a fixing foot according to the invention, the latter being shown in the course of being fixed to the rail,
Figure 2 is an exploded perspective view showing the fixing foot of Figure 1 and its closure cover,
Figure 3 is a section through the foot and its cover,
Figure 4 is a section taken in the plane indicated IV-IV in Figure 3.

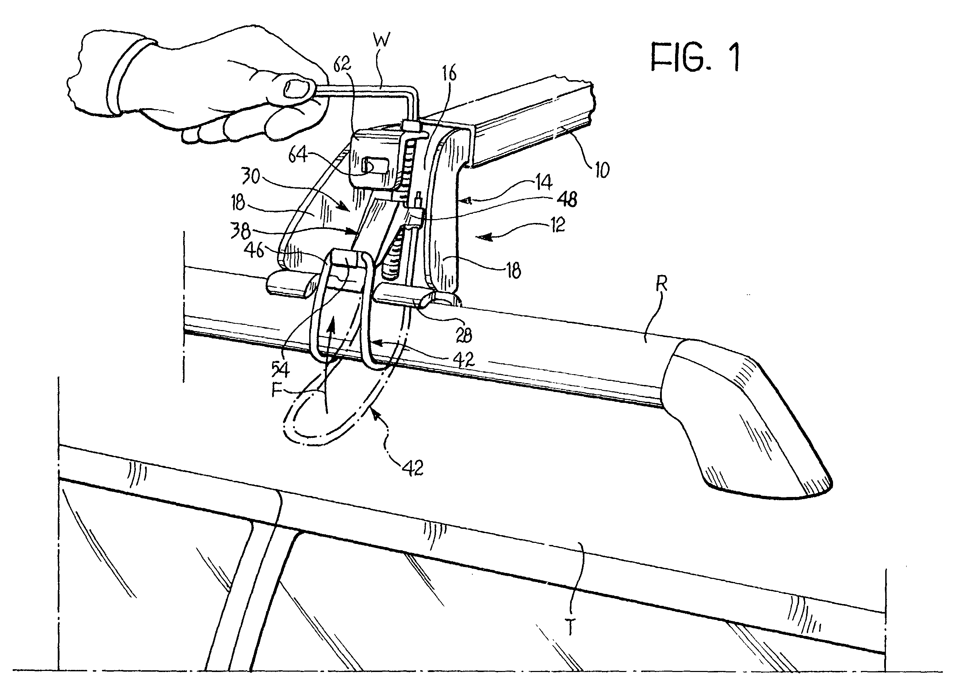

With reference to Figure 1, a motor-vehicle roof T has a pair of fixed longitudinal rails R.

A tubular load-carrying cross-member 10 of square cross-section has a pair of feet for fixing to the rail R, of which only one foot, generally indicated 12, is shown.

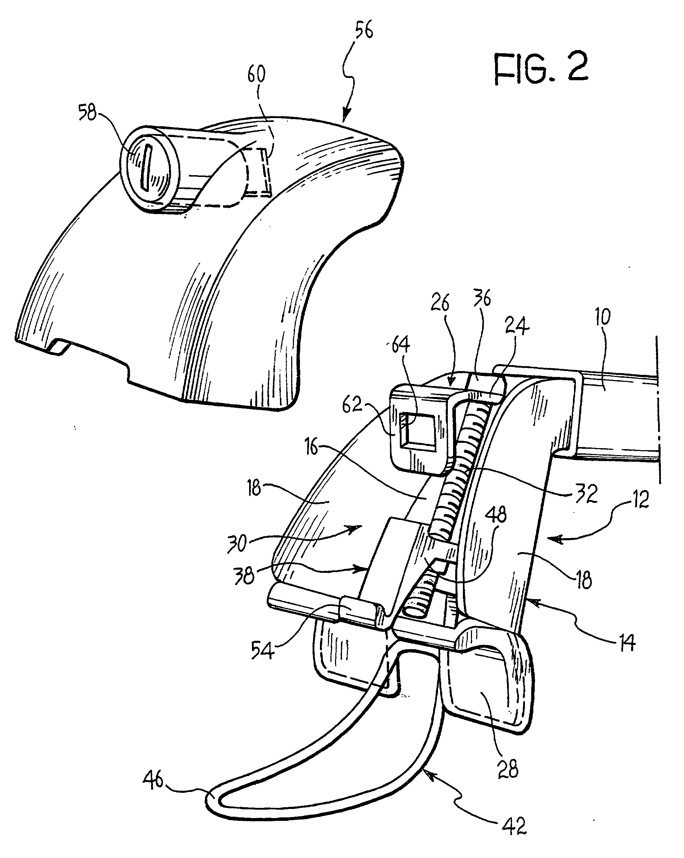

With reference to Figures 1 to 3, the foot 12 comprises a sheet-metal body 14 blanked and formed into a channel-shape which is open outwards laterally and at the top.

The body 14 comprises, amongst other things, a rear wall 16 corresponding to the inner side of the rail R and a pair of cheeks 18.

The rear wall 16 is extended by an appendage 20 which is fitted in the tubular cross-member 10 and is fixed, by means of a rivet 22, to the lower wall of this cross-member 10, together with a larger flange 24 of a shaped sheet-metal bracket 26 which will be referred to further below. The body 14 has a lower soft pad 28 of rubber or plastics material which bears on the rail R and abuts onto the inner side of the rail.

A nut-and-bolt tensioning device, generally indicated 30, is housed in the space defined between the rear wall 16 of the body 14 and the two cheeks 18 thereof.

The tensioning device 30 comprises a bolt 32 which extends through a hole 34 in the larger flange 24 of the bracket 26.

The bolt 32 has a hexagonal socket head 36 which abuts onto the shoulder constituted by the larger flange 24, from above.

A slide 38 in the form of a shaped element, for example, of diecast metal is associated with the bolt 32. A nut 40 engaged on the bolt 32 is incorporated in the slide 38.

A substantially inextensible loop 42 is associated with the tensioning device 30.

The loop 42 is preferably constituted by a cable comprising a thin steel wire rope covered by a sheath of PVC or other plastics material.

Two end portions of the loop 42 are indicated 44 and a tip of the loop, opposite the two end portions 44, is indicated 46.

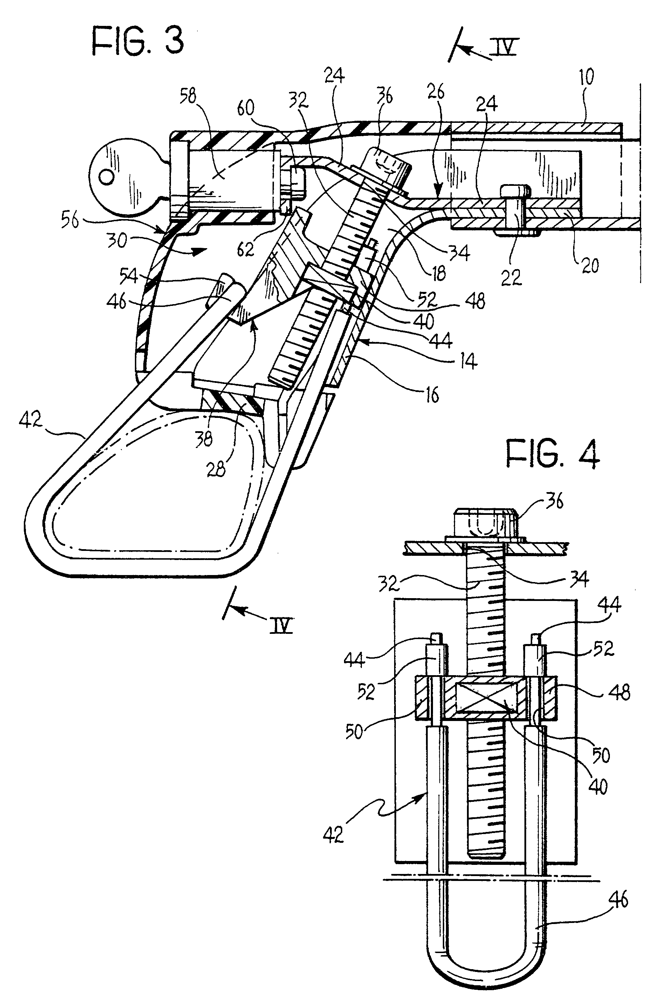

With further reference to the slide 38, this comprises a bracket-like portion 48 which, as shown in Figure 4, has a pair of holes 50 disposed side by side.

The bracket 48 is situated on the inner side of the foot 12, adjacent the rear wall 16.

The two end portions 44 of the loop 42 are threaded through the holes 50 and have crimped anchoring sleeves 52 which react against the bracket-like portion 48 from above.

On the other side of the nut 40, that is, on the outer side of the slide 38, the slide has an upwardly-open hooked member 54.

The hooked member 54 constitutes an engagement member for the tip 46 of the loop 42.

In order to fix the foot 12 to the rail R, the installer places the foot 12 so that it bears on the rail R by means of the pad 28 and pulls the loop 42 towards himself from the inside toward the outside, approximately as shown in chain line in Figure 1 and as indicated by the arrow F.

The installer then lifts the tip 46 of the loop 42, wrapping the loop 42 around the rail R from below and finally hooks the tip 46 of the loop onto the engagement member 54.

The arrangement in which the loop 42 is anchored to the slide 38 on the inner side of the rail R whilst the engagement member 54 is situated on the outer side is advantageous since the installer can hook the tip 46 of the loop into the engagement member 54 whilst following this operation with his eyes rather than groping blindly as he would have to do if the engagement member 54 were situated on the inner side of the rail R as in the document DE-U-82 29 446.

Once the hooking has been performed, as shown in Figure 1, the installer rotates the bolt 32 with a hexagonal wrench W in the direction corresponding to the raising of the nut 40 and of the slide 38 until the loop 42 is tightened firmly around the rail R.

For security reasons, as well as for aesthetic reasons, a shell-like cover 56 of metal or strong plastics material is associated with the body 14 of the foot 12.

This cover 56 can be fixed firmly to the body 14 and is shaped so as to complete the shape of the foot 12, closing the foot at the side and at the top so as to render the tensioning device 30 inaccessible.

A lock 58 with a key is used to fasten the cover 56. The lock 58 comprises a substantially rectangular rotatable catch 60.

The bracket 26 in turn comprises a smaller front flange 62 bent at right angles and having a rectangular window 64.

The arrangement and the configuration of the catch 60 and of the window 64 are such that the catch 60 can pass through the window 64 only when the catch is oriented in a predetermined position in which the cover 56 is free.

When the lock 58 is operated in the closure direction by means of its key, the catch 60 engages behind the smaller flange 62 and can no longer come out through the window 64, thus fixing the cover 56 firmly to the body 14 and preventing ill-intentioned access to the head 36 of the bolt in order to loosen the bolt and release the loop 42 from the engagement member 54.

## Claims

1. A foot for fixing a load-carrying cross-member (10) to a longitudinal rail (R) of a motor-vehicle roof (T), comprising a body (14) fixed to one end of the cross-member (10) and shaped for bearing on the rail (R) and for reacting against an inner side of the rail, the body (14) containing a tensioning device with a bolt (32) and a nut (40), of which the bolt (32) has a head (36) operable from above and reacting against a shoulder (24) fixed to the body (14), there being anchored to a nut portion (38, 40) of the tensioning device two ends (44) of a loop (42) which is intended to extend under the rail (R) and a tip (46) of which is intended to be hooked onto an engagement member (54) of the foot (12), the arrangement being such that rotation of the bolt (32) in one direction tensions the loop (42), fastening the rail (R) between the body (14) and the loop, **characterized in that** the engagement member (54) is fixed to the nut portion (38, 40).

2. A fixing foot according to Claim 1, **characterized in that** the nut portion (38, 40) consists of a slide in the form of a shaped element in which the nut (40) is incorporated, **in that**, on one side of the nut (40), the slide (38). has a bracket-like portion (48) with a pair of holes (50), disposed side by side, through which the ends (44) of the loop (42) can extend, **in that** the ends (44) of the loop (32) have anchoring sleeves (52) which react against the bracket-like portion (48) from above, and **in that**, on the other side of the nut (40), the slide (38) has an upwardly-open hooked element (54) which constitutes the said engagement member.

3. A fixing foot according to Claim 1 or Claim 2, **characterized in that** the ends (44) of the loop (42) are anchored to the nut portion (38) in a position corresponding to the inner side of the rail (R) and the engagement member (54) is situated in a position corresponding to the outer side of the rail (R).

4. A fixing foot according to Claim 3, **characterized in that** the body (14) of the foot (12) is constituted by a channel-shaped element which is open outwards laterally and at the top, with a rear wall (16) corresponding to the inner side of the rail (R) and with a pair of cheeks (18) which frame the tensioning device (30), the head (36) of the screw (32) being accessible from above between the cheeks (18), and **in that** a shell-like cover (56) associated with the body (14) of the foot (12) can be fixed firmly to the body and is shaped so as to complete the shape of the foot (12), closing the foot laterally and at the top in order to render the tensioning device (30) inaccessible.

5. A fixing foot according to Claim 4, **characterized in that** the shell-like cover (56) has a lock (58) with a key, and with a rotatable catch (60), and the body (14) of the foot (12) has, between its cheeks (18), an engagement flange (62) which has a window (64) through which the catch (60) can pass only when it is oriented in a predetermined position, the shell (56) being fixed firmly to the body (14) when the catch (60) is disposed behind the flange (62) and is thus oriented so that it cannot pass through the window (64).

6. A fixing foot according to Claim 5, **characterized in that** its body (14) comprises, in an upper portion thereof, a shaped bracket (26) with a larger flange (24) having a hole (34) through which the bolt (32) can extend and constituting the shoulder for the head (36) of the bolt (32), and with a smaller front flange (62) which has the window (64).

7. A load-carrying cross-member having, at its ends, a pair of fixing feet (12) according to any one of the preceding claims.

## Patentansprüche

1. Stützfuß für die Befestigung eines Lasten aufnehmenden Querträgers (10) am Längsholm (R) eines Daches (T) eines Kraftfahrzeugs, umfassend einen Körper (14), der an einem Ende des Querträgers (10) befestigt und so geformt ist, daß er sich an dem Längsholm (R) abstützt und an einer Innenseite des Längsholms anliegt, wobei der Körper (14) eine Zugvorrichtung (30) mit einer Schraube (32) und einer Mutter (40) aufnimmt, welche Schraube (32) einen von oben zu betätigenden Kopf (36) hat, der sich an einem am Körper (14) fest angebrachten Schenkel (24) abstützt, wobei an einem die Mutter (40) aufnehmenden Teil (38) der Zugvorrichtung zwei Enden (44) einer Schlinge (42) befestigt sind, die dazu bestimmt ist, den Längsholm (R) zu untergreifen und die eine Schlaufe (46) bildet, die an einem Einhakelement (54) des Stützfußes (12) festlegbar ist, wobei die Anordnung so ausgebildet ist, daß bei Verdrehung der Schraube (32) in einer Richtung die Schlinge (42) gespannt und dadurch der Längsholm (R) zwischen dem Körper (14) und der Schlinge (42) eingespannt wird, **dadurch gekennzeichnet, daß** das Einhakelement (54) an dem die Mutter (40) aufnehmenden Teil (38) fixiert ist.

2. Stützfuß nach Anspruch 1, **dadurch gekennzeichnet, daß** das die Mutter (40) aufnehmende Teil (38) aus einem als Formelement ausgebildeten Schieber besteht, in den die Mutter (40) eingebaut ist, daß der Schieber (38) auf der Seite der Mutter (40) die Form einer Konsole (48) mit zwei nebeneinander angeordneten Bohrungen (50) hat, durch die die Enden (44) der Schlinge (42) hindurch laufen, daß die Enden (44) der Schlinge (42) Verankerungsmuffen (52) haben, die sich von oben an der Konsole (48) abstützen, und daß auf der anderen Seite der Mutter (40) der Schieber (38) einen nach oben offenen Haken (54) hat, der das Einhakelement bildet.

3. Stützfuß nach Anspruch 1 oder 2, **dadurch gekennzeichnet, daß** die Enden (44) der Schlinge (42) an dem die Mutter (38) tragenden Teil (38) in einer Position befestigt sind, die auf der Innenseite des Längsholms (R) liegt, während das Einhakelement (54) in einer Position an der Außenseite des Längsholms (R) liegt.

4. Stützfuß nach Anspruch 3, **dadurch gekennzeichnet, daß** der Körper (14) des Stützfußes (12) aus einem rinnenförmigen Element besteht, das seitlich nach außen und oben offen ist und eine Rückwand (16) im Bereich der Innenseite des Längsholms (R) sowie ein Paar von Wangen (18) hat, zwischen denen die Zugvorrichtung (30) angeordnet ist, wobei der Kopf (36) der Schraube (32) zwischen den Wangen (18) von oben zugänglich ist, und daß dem Körper (14) des Stützfußes (12) ein schalenförmiger Deckel (56) zugeordnet ist, der fest an dem Körper fixiert werden kann und so geformt ist, daß er die Form des Stützfußes (12) in der Weise ergänzt, daß er diesen seitlich und nach oben abschließt, wodurch die Zugvorrichtung (30) unzugänglich ist.

5. Stützfuß nach Anspruch 4, **dadurch gekennzeichnet, daß** der schalenförmige Deckel (56) ein mit Schlüssel versehenes Schloß (58) mit einer Nase (60) hat und der Körper (14) des Stützfußes (12) zwischen seinen Wangen (18) einen Eingriffsschenkel (62) hat, in dem ein Fenster (64) ausgebildet ist, durch welches die Nase (60) nur in einer vorbestimmten Position hindurchgreifen kann, wobei der Deckel (56) fest an dem Körper (14) fixiert ist, wenn die Nase (60) hinter den Schenkel (62) greift und so gedreht ist, daß sie nicht durch das Fenster (64) herausrutschen kann.

6. Stützfuß nach Anspruch 5, **dadurch gekennzeichnet, daß** sein Körper (14) in einem oberen Bereich einen geformten Bügel (26) mit einem größeren Schenkel (24) aufweist, der für den Durchtritt der Schraube (32) eine Bohrung (34) hat und die Abstützschulter für den Kopf (36) der Schraube (32) bildet, wobei der Körper (14) auf der vorderen Seite einen kleineren Schenkel (62) hat, in dem das Fenster (64) ausgebildet ist.

7. Querträger für die Aufnahme von Lasten, der an seinen Enden ein Paar von Stützfüßen (12) nach einem der vorhergehenden Ansprüche aufweist.

## Revendications

1. Pied pour la fixation d'une traverse (10) de support de charge sur un rail longitudinal (R) d'un toit de véhicule automobile (T), comprenant un corps (14) fixé à une extrémité de la traverse (10) et formé pour porter sur le rail (R) et réagir contre une face intérieure du rail, le corps (14) comprenant un dispositif tendeur avec un boulon (32) et un écrou (40), dont le boulon (32) a une tête (36) opérable depuis le haut et réagissant contre un épaulement (24) fixé au corps (14), dans lequel sont ancrées sur une partie d'écrou (38, 40) du dispositif tendeur deux extrémités (44) d'une boucle (42) qui est destinée à s'étendre sous le rail (R) et dont un bout (46) est destiné à être accroché dans un élément de prise (54) du pied (12), l'agencement étant tel qu'une rotation du boulon (32) dans une direction tend la boucle (42), serrant le rail (R) entre le corps (14) et la boucle, **caractérisé en ce que** l'élément de prise (54) est fixé à la partie d'écrou (38, 40).

2. Pied de fixation selon la revendication 1, **caractérisé en ce que** la partie d'écrou (38, 40) consiste en un coulisseau de la forme d'un élément façonné dans lequel est intégré l'écrou (40), **en ce que** d'un côté de l'écrou (40), le coulisseau (38) a une partie (48) de type patte avec une paire de trous (50) placés côté à côté, à travers lesquels peuvent s'étendre les extrémités (44) de la boucle (42), **en ce que** les extrémités (44) de la boucle (32) ont des douilles d'ancrage (52) qui réagissent depuis le haut contre la partie (48) de type patte, et **en ce que** de l'autre côté de l'écrou (40), le coulisseau (38) a un élément crochu (54) ouvert vers le haut qui constitue ledit élément de prise.

3. Pied de fixation selon la revendication 1 ou 2,
**caractérisé en ce que** les extrémités (44) de la boucle (42) sont ancrées à la partie d'écrou (38) dans une position correspondant à la face intérieure du rail (R) et l'élément de prise (54) est situé dans une position correspondant au côté extérieur du rail (R).

4. Pied de fixation selon la revendication 3, **caractérisé en ce que** le corps (14) du pied (12) est constitué d'un élément en forme de canal qui est ouvert vers l'extérieur sur le côté et le dessus, avec une paroi arrière (16) correspondant à la face intérieure du rail (R) et avec une paire de joues (18) qui encadrent le dispositif tendeur (30), la tête (36) de la vis (32) étant accessible depuis le haut entre les joues (18), et **en ce qu'**un couvercle de type coque (56) associé au corps (14) du pied (12) peut être fixé fermement au corps et est formé de manière à compléter la forme du pied (12), en fermant le pied latéralement et en haut afin de rendre le dispositif tendeur (30) inaccessible.

5. Pied de fixation selon la revendication 4, **caractérisé en ce que** le couvercle de type coque (56) a une serrure (58) avec une clé, et avec un verrou rotatif (60), et le corps (14) du pied (12) possède entre ses joues (18) une bride de prise (62) qui a une fenêtre (64) à travers laquelle le verrou (60) peut passer seulement s'il est orienté dans une position prédéterminée, la coque (56) étant fixée fermement au corps (14) quand le verrou (60) est placé derrière la bride (62) et est donc orienté de manière à ne pas pouvoir passer à travers la fenêtre (64).

6. Pied de fixation selon la revendication 5, **caractérisé en ce que** son corps (14) comprend, dans une partie supérieure, une patte façonnée (26) avec une bride plus grande (24) ayant un trou (34) à travers lequel peut s'étendre le boulon (32) et constituant l'épaulement pour la tête (36) du boulon (32), et avec une bride avant (62) plus petite qui possède la fenêtre (64).

7. Traverse de support de charge ayant, à ses extrémités, une paire de pieds de fixation (12) selon l'une quelconque des revendications précédentes.
